(19) Europäisches Patentamt / European Patent Office / Office européen des brevets

(11) **EP 4 481 613 A1**

(12) **EUROPEAN PATENT APPLICATION**
published in accordance with Art. 153(4) EPC

(43) Date of publication:
**25.12.2024   Bulletin 2024/52**

(21) Application number: **22926691.1**

(22) Date of filing: **02.08.2022**

(51) International Patent Classification (IPC):
**G06F 30/17** (2020.01)        **G06F 30/20** (2020.01)
**G06F 17/00** (2019.01)

(52) Cooperative Patent Classification (CPC):
Y02E 30/30

(86) International application number:
**PCT/CN2022/109785**

(87) International publication number:
**WO 2023/155385 (24.08.2023 Gazette 2023/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **17.02.2022   CN 202210148251**

(71) Applicants:
• **China Nuclear Power Design Company Ltd. (Shenzhen)**
  **Shenzhen, Guangdong 518172 (CN)**
• **China Nuclear Power Engineering Co., Ltd.**
  **Shenzhen, Guangdong 518124 (CN)**
• **China General Nuclear Power Corporation**
  **Shenzhen, Guangdong 518028 (CN)**
• **CGN Power Co., Ltd.**
  **Shenzen, Guangdong 518028 (CN)**

(72) Inventors:
• **LI, Youming**
  **Shenzhen, Guangdong 518172 (CN)**
• **LIU, Lang**
  **Shenzhen, Guangdong 518172 (CN)**
• **QIN, Manqing**
  **Shenzhen, Guangdong 518172 (CN)**
• **YANG, Fan**
  **Shenzhen, Guangdong 518172 (CN)**
• **TANG, Gang**
  **Shenzhen, Guangdong 518172 (CN)**
• **HE, Mengfu**
  **Shenzhen, Guangdong 518172 (CN)**
• **MAO, Jie**
  **Shenzhen, Guangdong 518172 (CN)**
• **XIAO, Chaoping**
  **Shenzhen, Guangdong 518172 (CN)**

(74) Representative: **Greaves Brewster LLP**
  **Copa House**
  **Station Road**
  **Cheddar, Somerset BS27 3AH (GB)**

(54) **MECHANICAL ANALYSIS PROCESSING METHOD AND APPARATUS FOR NUCLEAR POWER PLANT SUPPORT MEMBER, DEVICE, AND MEDIUM**

(57)    The present application relates to a mechanical analysis processing method for a nuclear power plant support member, and the method comprises: for a target support member in a nuclear power plant, determining an original pipeline system load of a pipeline system supported by the target support member in a pipeline system coordinate system (step 202); respectively determining a coordinate axis matching each coordinate axis of a global coordinate system of the nuclear power plant from the coordinate axis of an overall local coordinate system of the target support member, and constructing a mechanical analysis model coordinate system close to a direction of the global coordinate system according to a direction of a matched coordinate axis (step 204); constructing a mechanical analysis model of the target support member on the basis of the mechanical analysis model coordinate system (step 206); and converting the original pipeline system load into a target pipeline system load in the mechanical analysis model coordinate system, causing the mechanical analysis model to perform mechanical analysis processing on the basis of the target pipeline system load (step 208).

EP 4 481 613 A1

~~ S202

for a target support member used in a nuclear power plant, an original pipeline system load of a pipeline system supported by the target support member in a pipeline system coordinate system is determined

~~ S204

coordinate axes matching coordinate axes in the global coordinate system of the nuclear power plant are determined respectively from coordinate axes in an overall local coordinate system of the target support member, and a mechanical analysis model coordinate system with directions approaching directions of the global coordinate system is constructed according to directions of the matched coordinate axes

~~ S206

a mechanical analysis model of the target support member is constructed based on the mechanical analysis model coordinate system

~~ S208

the original pipeline system load is converted into a target pipeline system load in the mechanical analysis model coordinate system, to allow the mechanical analysis model to perform mechanical analysis processing based on the target pipeline system load

FIG. 2

**Description**

**CROSS REFERENCE TO RELATED APPLICATION**

The present application claims priority to Chinese Patent Application with No. 202210148251.9, entitled "Mechanical Analysis Processing Method and Apparatus for Support Member Used in Nuclear Power Plant, Device, and Medium", and filed on February 17, 2022, the content of which is expressly incorporated herein by reference in its entirety.

**TECHNICAL FIELD**

The present application relates to the field of nuclear power technology, and particularly to a mechanical analysis processing method and apparatus for a support member used in a nuclear power plant, a device and a medium.

**BACKGROUND**

Nuclear power plants play a very important role in human life and the development of science and technology. Since a nuclear power plant is equipped with a plurality of pipeline systems and a large number of support members for supporting the pipeline systems, and the mechanical analyses processing of the support members of the nuclear power plant inevitably affect the structure of the entire nuclear power plant, accordingly it is particularly important to accurately perform the mechanical analyses on the support members of the nuclear power plant.

In the conventional method, the mechanical analysis processing is performed on all items in a support member directly in the global coordinate system of the nuclear power plant. Since the support member is too local relative to the nuclear power plant, the force conditions of the support member can not be accurately expressed with the global coordinate system, which leads to inaccurate mechanical analysis of the support member.

**SUMMARY**

According to various embodiments provided in the present invention, a mechanical analysis processing method and apparatus for a support member used in a nuclear power plant, a computer device, a computer-readable storage medium, and a computer program product are provided.

In the first aspect of the present invention, a mechanical analysis processing method for a support member used in a nuclear power plant is provided, which is executed by a server, and the method includes:

for a target support member used in the nuclear power plant, determining an original pipeline system load of a pipeline system supported by the target support member in a pipeline system coordinate system;

determining coordinate axes matching coordinate axes in a global coordinate system of the nuclear power plant respectively from coordinate axes in an overall local coordinate system of the target support member, and constructing a mechanical analysis model coordinate system with directions approaching directions of the global coordinate system according to directions of the matched coordinate axes;

constructing a mechanical analysis model of the target support member based on the mechanical analysis model coordinate system;

converting the original pipeline system load into a target pipeline system load in the mechanical analysis model coordinate system, to allow the mechanical analysis model to perform mechanical analysis processing based on the target pipeline system load.

In the second aspect of the present invention, a mechanical analysis processing apparatus for a support member used in a nuclear power plant is provided, including:

a determination module configured to, for a target support member used in the nuclear power plant, determine an original pipeline system load of a pipeline system supported by the target support member in a pipeline system coordinate system;

a construction module configured to determine coordinate axes matching coordinate axes in a global coordinate system of the nuclear power plant respectively from coordinate axes in an overall local coordinate system of the target support member, construct a mechanical analysis model coordinate system with directions approaching directions of the global coordinate system according to directions of the matched coordinate axes, and construct a mechanical analysis model of the target support member based on the mechanical analysis model coordinate system;

an analysis module configured to convert the original pipeline system load into a target pipeline system load in the mechanical analysis model coordinate system, to allow the mechanical analysis model to perform mechanical analysis processing based on the target pipeline system load.

In the third aspect of the present invention, a computer device is provided, including one or more processors and a memory storing computer-readable instructions, the one or more processors, when executing the computer-readable instructions, implement the method of any of the embodiments.

In the fourth aspect of the present invention, a computer-readable storage medium is provided, on which computer-readable instructions are stored, the computer-readable instructions, when executed by one or more processors, cause the one or more processors to implement the method of any of the embodiments.

In the fifth aspect of the present invention, a computer program product is provided, including computer-readable instructions, the computer-readable instructions, when executed by a processor, cause the processor to implement the method of any of the embodiments.

The details of one or more embodiments of the present invention are set forth in the accompanying drawings and the description below. Other features, purposes, and advantages of the present application will be obvious from the description and drawings, and claims.

## BRIEF DESCRIPTION OF THE DRAWINGS

In order to more clearly illustrate the embodiments of the present invention or the technical solution in the existing technology, accompanying drawings required for description in the embodiments or the description of the existing technology will be briefly introduced below. Obviously, the drawings described below are only some embodiments of the present invention, those skilled in the art can obtain other drawings according to these accompanying drawings without any creative effort.

FIG. 1 is an application environment diagram of a mechanical analysis processing method for a support member used in a nuclear power plant according to an embodiment.

FIG. 2 is a flow chart showing a mechanical analysis processing method for a support member used in a nuclear power plant according to an embodiment.

FIG. 3 is a schematic diagram of an overall local coordinate system, a global coordinate system, and a pipeline system coordinate system in a geometric model according to an embodiment.

FIG. 4a and 4b are schematic diagrams of a geometric model and a mechanical analysis model of a target support member according to an embodiment, respectively.

FIG. 5 is a structural block diagram of a mechanical analysis processing apparatus for a support member used in a nuclear power plant according to an embodiment.

FIG. 6 is an internal structure diagram of a computer device according to an embodiment.

FIG. 7 is an internal structure diagram of a computer device according to another embodiment.

## DETAILED DESCRIPTION

In order to make the purpose, technical solution and advantages of the present invention more clearly, the present invention is further elaborated below with reference to the accompanying drawings and embodiments. It should be appreciated that the specific embodiments described herein are used for explaining the present invention, rather than limiting the present invention.

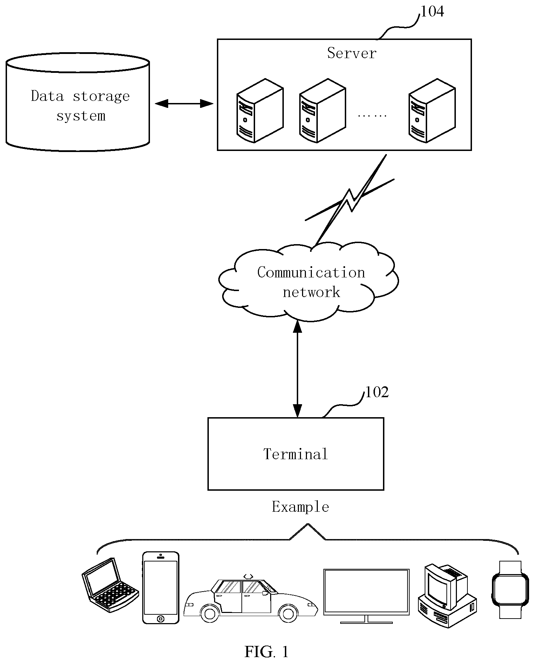

The mechanical analysis processing method for the support member used in the nuclear power plant provided in the embodiment of the present invention can be applied to the application environment as shown in FIG. 1. A terminal 102 is in communication with a server 104 via a network. A data storage system can store data that the server 104 needs to process. The data storage system may be integrated in the server 104 or placed on the cloud or other network servers. The server 104 may determine, for a target support member in the nuclear power plant, an original pipeline system load of a pipeline system supported by the target support member in a pipeline system coordinate system. The server 104 can determine coordinate axes of the overall local coordinate system of the target support member that match the coordinate axes in the global coordinate system of the nuclear power plant respectively, and construct a mechanical analysis model coordinate system with directions approaching the directions of the global coordinate system according to the directions of the matched coordinate axes. The server 104 can construct a mechanical analysis model of the target support member based on the mechanical analysis model coordinate system, and convert the original pipeline system load into a target pipeline system load in the mechanical analysis model coordinate system, such that the mechanical analysis model performs the mechanical analysis processing based on the target pipeline system load. It should be appreciated that a user may trigger the server 104 through the terminal 102 to execute the mechanical analysis processing method for the support member used in the nuclear power plant. The terminal 102 may be, but not limited to, various personal computers, laptops, smart phones, tablets, Internet of Things devices and portable wearable devices. The Internet of Things devices may be smart speakers, smart TVs, smart air conditioners, smart car-mounted devices, etc. The portable wearable devices may be smart watches, smart bracelets, head-mounted devices, etc. The server 104 may be implemented as an independent server or a server cluster consisting of multiple servers.

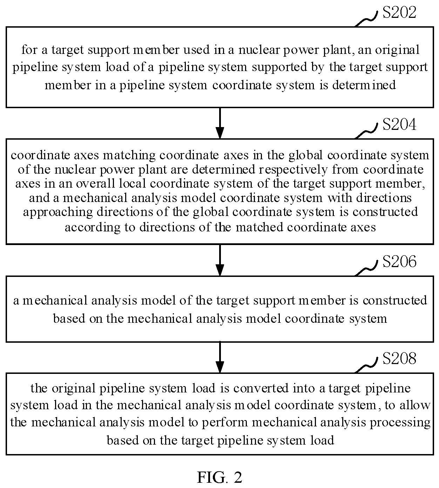

In an embodiment, as shown in FIG. 2, a mechanical analysis processing method for a support member used in a nuclear power plant is provided, and the method is applied to the server in FIG. 1 as an example for illustration. The method may include the following steps.

Step 202: for a target support member used in a nuclear power plant, an original pipeline system load of a pipeline system supported by the target support member in a pipeline system coordinate system is determined.

The support member is configured to support the pipeline system in the nuclear power plant. The original pipeline system load refers to a load of the pipeline system in the pipeline system coordinate system. The target support member is a support member to be subjected to the mechanical analysis processing. The pipeline system coordinate system is a coordinate system constructed based on direction vectors of the original pipeline system load. It can be appreciated that the direction vectors of the pipeline system load can be determined in the global coordinate system of the nuclear power plant, and then the pipeline system coordinate system can be constructed based on the determined direction vectors. It should be noted that the pipeline system coordinate system is equivalent to a local coordinate system constructed with the pipeline system itself as a reference, which is essentially different from the global coordinate system of the nuclear power plant.

In an embodiment, the support member may include a pipe clamp. The support member may further include one or more of a steel section, a reinforcing plate, a buried plate, and a pull rod. It can be appreciated that the support member fixes and constrains a pipe with the pipe clamp.

In an embodiment, the user may trigger the server through the terminal to construct a geometric model for the pipeline system and the support member in the nuclear power plant. It should be appreciated that the server may establish a local coordinate system for each item of the support member respectively, to construct a geometric model of a corresponding item by using the local coordinate system. The server may establish an overall local coordinate system for the support member as a whole, to construct a geometric model of the support member including a plurality of items by using the global local coordinate system.

Specifically, the server can determine, in the pipeline system coordinate system, the original pipeline system load of the pipeline system supported by the target support member used in the unclear power plant through the constructed geometric model. It should be appreciated that the mechanical analysis model refers to an expression of mechanical relationships abstracted according to geometric characteristics of an object under study. Accordingly, the server can construct a mechanical analysis model of the support member based on the constructed geometric model of the support member.

In an embodiment, the server may establish a pipe clamp local coordinate system for the pipe clamp of the target support member, and compute the load of the pipeline system at the pipe clamp by using the pipe clamp local coordinate system. It should be appreciated that the support member can support and constrain the pipeline system by means of the pipe clamp. The support and constraint can be performed in a number of degrees of freedom, then the original pipeline system load may have the same number of direction vectors accordingly, that is, the direction and value of the original pipeline system load are related to a support function of the support member. The server may determine the direction vectors of the original pipeline system load and determine the pipeline system coordinate system according to the direction vectors. It should be appreciated that the server can use the direction vectors of the original pipeline system load as direction vectors of the coordinate axes in the pipeline system coordinate system. The original pipeline system load has a number of direction vectors, then the pipeline system coordinate system has the same number of coordinate axes accordingly.

Step 204: coordinate axes matching coordinate axes in the global coordinate system of the nuclear power plant respectively are determined from coordinate axes in an overall local coordinate system of the target support member respectively, and a mechanical analysis model coordinate system with directions approaching directions of the global coordinate system is constructed according to directions of the matched coordinate axes.

The overall local coordinate system is a local coordinate system established for the target support member as a whole. The global coordinate system is a coordinate system established for the nuclear power plant as a whole. The mechanical analysis model coordinate system is a coordinate system for constructing a mechanical analysis model and performing mechanical analysis on the support member.

Specifically, the server may determine the overall local coordinate system of the target support member and the global coordinate system of the nuclear power plant from the geometric model of the target support member. The server can determine the coordinate axes matching the coordinate axes in the global coordinate system of the nuclear power plant from the coordinate axes in the overall local coordinate system of the target support member respectively, and construct the mechanical analysis model coordinate system with directions approaching the directions of the global coordinate system according to the directions of the matched coordinate axes.

Step 206: a mechanical analysis model of the target support member is constructed based on the mechanical analysis model coordinate system.

Specifically, the server may determine a key point coordinate of the target support member from the geometric model of the support member, and construct the mechanical analysis model of the target support member according to the key point coordinate and the mechanical analysis model coordinate system.

Step 208: the original pipeline system load is converted into a target pipeline system load in the mechanical analysis model coordinate system, to allow the mechanical analysis model to perform mechanical analysis processing based on the target pipeline system load.

The target pipeline system load is a load of the pipeline system in the mechanical analysis model coordinate system.

Specifically, when the pipeline system coordinate system is parallel to the mechanical analysis model coordinate system, the server may directly assign the original pipeline system load to the coordinate axes in the mechanical analysis model coordinate system according to the parallel relationship between the pipeline system coordinate system and the mechanical analysis model coordinate system, to obtain the target pipeline system load, such that the mechanical analysis model performs the mechanical analysis processing based on the target pipeline system load.

In an embodiment, when the pipeline system coordinate system is not parallel to the mechanical analysis model coordinate system, the server may decompose and combine the original pipeline system load according to the directions of the coordinate axes in the mechanical analysis model coordinate system, to obtain the target pipeline system load, such that the mechanical analysis model performs the mechanical analysis processing based on the target pipeline system load.

In the above-mentioned mechanical analysis processing method for the support member used in the nuclear power plant, for the target support member used in the nuclear power plant, the original pipeline system load of the pipeline system supported by the target support member in the pipeline system coordinate system is determined; the coordinate axes matching the coordinate axes in the global coordinate system of the nuclear power plant respectively are determined from the coordinate axes in the overall local coordinate system of the target support member respectively, the mechanical analysis model coordinate system with directions approaching the directions of the global coordinate system is constructed according to the directions of the matched coordinate axes; the mechanical analysis model of the target support member is constructed based on the mechanical analysis model coordinate system; the original pipeline system load is converted into the target pipeline system load in the mechanical analysis model coordinate system, such that the mechanical analysis model performs the mechanical analysis processing based on the target pipeline system load. The mechanical analysis model coordinate system is constructed based on the overall local coordinate system of the target support member and the global coordinate system of the nuclear power plant, accordingly the mechanical analysis model coordinate system has the characteristics of both the overall local coordinate system and the global coordinate system. Therefore, the use of the mechanical analysis model coordinate system can more accurately express the force condition of the support member and improve the accuracy of the mechanical analysis processing of the support member used in the nuclear power plant.

In an embodiment, the original pipeline system load may include an original pipeline load value corresponding to the direction of each coordinate axis in the pipeline system coordinate system. The target pipeline system load may include a target pipeline load value corresponding to the direction of each coordinate axis in the mechanical analysis model coordinate system. The step of converting the original pipeline system load into the target pipeline system load in the mechanical analysis model coordinate system may include: when the pipeline system coordinate system is parallel to the mechanical analysis model coordinate system, for the original pipeline load value corresponding to the direction of each coordinate axis in the pipeline system coordinate system, the original pipeline load value is assigned to the parallel coordinate axis in the mechanical analysis model coordinate system, to obtain a target pipeline load value corresponding to the direction of the parallel coordinate axis. The parallel coordinate axis refers to a coordinate axis in the mechanical analysis model coordinate system that is parallel to the direction of the coordinate axis.

The parallel coordinate axis refers to a coordinate axis in the mechanical analysis model coordinate system that is parallel to the direction of the coordinate axis in the pipeline system coordinate system.

Specifically, the server can determine whether the pipeline system coordinate system is parallel to the mechanical analysis model coordinate system. When the pipeline system coordinate system is parallel to the mechanical analysis model coordinate system, for the original pipeline load value corresponding to the direction of each coordinate axis in the pipeline system coordinate system, the server may assign the original pipeline load value to the parallel coordinate axis in the mechanical analysis model coordinate system to obtain the target pipeline load value corresponding to the direction of the parallel coordinate axis. It should be appreciated that the original pipeline system load may include the directions of the coordinate axes in the pipeline system coordinate system and original pipeline load values each corresponding to the direction of each coordinate axis in the pipeline system coordinate system.

In the embodiment, when the pipeline system coordinate system is parallel to the mechanical analysis model coordinate system, the original pipeline load value can be directly assigned to the corresponding coordinate axis in the mechanical analysis model coordinate system based on the parallel relationship between the pipeline system coordinate system and the mechanical analysis model coordinate system. There is no need to decompose and combine the original pipeline system load to obtain the target pipeline load values, which greatly reduces the cost of computation of the target pipeline load values.

In an embodiment, the pipeline system coordinate system may include a horizontal axis, a longitudinal axis and a vertical axis. The step that when the pipeline system coordinate system is parallel to the mechanical analysis model coordinate system, for the original pipeline load value corresponding to the direction of each coordinate axis in the pipeline system coordinate system, the original pipeline load value is assigned to the parallel coordinate axis in the mechanical analysis model coordinate system to obtain the target pipeline load value corresponding to the direction of the parallel coordinate axis, may include: when the pipeline system coordinate system is parallel to the mechanical analysis model coordinate system, an original pipeline load value in the original pipeline system load corresponding to a direction of the horizontal axis in the pipeline system coordinate system is assigned to a coordinate axis in the mechanical analysis model coordinate system parallel to the direction of the horizontal axis; an original pipeline load value in the original pipeline system load corresponding to a direction of the longitudinal axis in the pipeline system coordinate system is assigned to a coordinate axis in the mechanical analysis model coordinate system parallel to the direction of the longitudinal axis; and an original pipeline load value in the original pipeline system load corresponding to a direction of the vertical axis in the pipeline system coordinate system is assigned to a coordinate axis in the mechanical analysis model coordinate system parallel to the direction of the vertical axis.

The mechanical analysis model coordinate system and the pipeline system coordinate system are both spatial coordinate systems.

Specifically, the server may determine whether at least two of the horizontal axis, the longitudinal axis, and the vertical axis in the mechanical analysis model coordinate system are respectively parallel to coordinate axes in the pipeline system coordinate system. It should be appreciated that the parallel relationship of two coordinate axes between two coordinate systems indicates that the two coordinate systems are parallel to each other. When the pipeline system coordinate system is parallel to the mechanical analysis model coordinate system, the server may assign the original pipeline load value in the original pipeline system load corresponding to the direction of the horizontal axis in the pipeline system coordinate system to the coordinate axis in the mechanical analysis model coordinate system parallel to the direction of the horizontal axis. The server may assign the original pipeline load value in the original pipeline system load corresponding to the direction of the longitudinal axis in the pipeline system coordinate system to the coordinate axis in the mechanical analysis model coordinate system parallel to the direction of the longitudinal axis. The server may assign the original pipeline load value in the original pipeline system load corresponding to the direction of the vertical axis in the pipeline system coordinate system to the coordinate axis in the mechanical analysis model coordinate system parallel to the direction of the vertical axis, and the target pipeline system load is obtained.

In the embodiment, when the pipeline system coordinate system is parallel to the mechanical analysis model coordinate system, the original pipeline load values corresponding to the horizontal axis, the longitudinal axis and the vertical axis in the pipeline system coordinate system can be directly assigned to the corresponding coordinate axes in the mechanical analysis model coordinate system based on the parallel relationship between the pipeline system coordinate system and the mechanical analysis model coordinate system. Accordingly, there is no need to decompose and combine the original pipeline system load to obtain the target pipeline load values, which greatly reduces the cost of the computation of the target pipeline load values.

In an embodiment, the step that when the pipeline system coordinate system is parallel to the mechanical analysis model coordinate system, for the original pipeline load value corresponding to the direction of each coordinate axis in the pipeline system coordinate system, the original pipeline load value is assigned to the parallel coordinate axis in the mechanical analysis model coordinate system to obtain the target pipeline load value corresponding to the direction of the parallel coordinate axis, may include: when the number of coordinate axes in the pipeline system coordinate system is less than the number of coordinate axes in the mechanical analysis model coordinate system, a pipe clamp local coordinate system of a target pipe clamp corresponding to the original pipeline system load is determined; the target pipe clamp is configured to connect the target support member to the pipeline system; the number of coordinate axes in the pipe clamp local coordinate system is consistent with the number of coordinate axes in the mechanical analysis model coordinate system, and the pipe clamp local coordinate system includes coordinate axes parallel to coordinate axes in the pipeline system coordinate system respectively; when the pipe clamp local coordinate system is parallel to the mechanical analysis model coordinate system, original pipeline load values are assigned to the coordinate axes in the mechanical analysis model coordinate system respectively parallel to the coordinate axes in the pipe clamp local coordinate system according to a parallel relationship between the pipeline system coordinate system and the pipe clamp local coordinate system, and target pipeline load values corresponding to directions of the parallel coordinate axes are obtained.

The pipe clamp local coordinate system is a local coordinate system established for the pipe clamp of the target support member.

Specifically, when the number of coordinate axes in the pipeline system coordinate system is less than the number of coordinate axes in the mechanical analysis model coordinate system, the server may determine the pipe clamp local coordinate system of the target pipe clamp corresponding to the original pipeline system load from the geometric model of the support member. It should be appreciated that the mechanical analysis model coordinate system is a spatial coordinate system, including a horizontal axis, a longitudinal axis and a vertical axis, while the support member supports and constrains the pipeline in less than three directions. For example, the support member has two directed constraints on the pipeline, and the original pipeline system load obtained in this case only includes two constraint directions. The support member may have one sliding constraint on the pipeline, and the original pipeline system load obtained in this case only includes one constraint direction. In essence, the pipeline system coordinate system is not established based on entity components in the nuclear power plant, but is extracted from the original pipeline system load. For example, when the pipe clamp local coordinate system is parallel to the mechanical analysis model coordinate system, the server may assign the original pipeline load values to the coordinate axes in the mechanical analysis model coordinate system parallel to the coordinate axes in the pipe clamp local coordinate system respectively according to the parallel relationship between the pipeline system coordinate system and the pipe clamp local coordinate system, and the target pipeline load values corresponding to the directions of the parallel coordinate axes are obtained.

In the embodiment, when the number of coordinate axes in the pipeline system coordinate system is less than the number of coordinate axes in the mechanical analysis model coordinate system, the pipeline system coordinate system can be replaced by the pipe clamp local coordinate system. When the pipe clamp local coordinate system is parallel to the mechanical analysis model coordinate system, the original pipeline load values are assigned to the coordinate axes in the mechanical analysis model coordinate system parallel to the coordinate axes in the pipe clamp local coordinate system according to the parallel relationship between the pipeline system coordinate system and the pipe clamp local coordinate system, and the target pipeline load values corresponding to the directions of the parallel coordinate axes are obtained. Accordingly, there is no need to decompose and combine the original pipeline system load to obtain the target pipeline load values, which greatly reduces the cost of the computation of the target pipeline load values.

In an embodiment, the method may further include: an included angle between each coordinate axis in the pipeline system coordinate system and each coordinate axis in the mechanical analysis model coordinate system is determined respectively, and a plurality of included angles are obtained; it is determined whether at least two coordinate axes in the mechanical analysis model coordinate system are respectively parallel to the coordinate axes in the pipeline system coordinate system according to the plurality of included angles and a preset parallel angle error; when at least two coordinate axes in the mechanical analysis model coordinate system are respectively parallel to the coordinate axes in the pipeline system coordinate system, the mechanical analysis model coordinate system is determined to be parallel to the pipeline system coordinate system.

Specifically, the server may determine the included angle between each coordinate axis in the pipeline system coordinate system and each coordinate axis in the mechanical analysis model coordinate system according to a direction vector of the pipeline system coordinate system and a direction vector of the mechanical analysis model coordinate system, and obtain a plurality of included angles. When a difference value between the included angle and the parallel angle is within a preset parallel angle error range, the server can determine that two coordinate axes corresponding to the included angle are parallel to each other. It should be appreciated that the parallel angle is an angle for determining parallelism, such as 0 degrees and 180 degrees. The server can determine whether at least two coordinate axes in the mechanical analysis model coordinate system are parallel to the coordinate axes in the pipeline system coordinate system respectively by comparing the difference values between the included angles and the parallel angle to the preset parallel angle error, and determine that the mechanical analysis model coordinate system is parallel to the pipeline system coordinate system when at least two coordinate axes in the mechanical analysis model coordinate system are parallel to the coordinate axes in the pipeline system coordinate system respectively. For example, when the preset parallel angle error is 2 degrees, no matter the included angle is 182 degrees, 2 degrees or 178 degrees, the server determines that the coordinate axes corresponding to the included angle are parallel to each other.

In an embodiment, the server may perform a point-by-point multiplication on the direction vector of the pipeline system coordinate system and the direction vector of the mechanical analysis model coordinate system, compute a cosine value of an included angle between each coordinate axis in the pipeline system coordinate system and each coordinate axis in the mechanical analysis model coordinate system, and determine the included angle corresponding to the cosine value.

$$\vec{X}_{pipe} \bullet \vec{X}_{model} = \left|\vec{X}_{pipe}\right| \bullet \left|\vec{X}_{model}\right| \bullet \cos\theta_{XX} = \cos\theta_{XX} \quad (1)$$

$$\vec{X}_{pipe} \bullet \vec{Y}_{model} = \left|\vec{X}_{pipe}\right| \bullet \left|\vec{Y}_{model}\right| \bullet \cos\theta_{XY} = \cos\theta_{XY} \quad (2)$$

$$\vec{X}_{pipe} \bullet \vec{Z}_{model} = \left|\vec{X}_{pipe}\right| \bullet \left|\vec{Z}_{model}\right| \bullet \cos\theta_{XZ} = \cos\theta_{XZ} \quad (3)$$

$$\vec{Y}_{pipe} \bullet \vec{X}_{model} = \left|\vec{Y}_{pipe}\right| \bullet \left|\vec{X}_{model}\right| \bullet \cos\theta_{YX} = \cos\theta_{YX} \quad (4)$$

$$\vec{Y}_{pipe} \bullet \vec{Y}_{model} = \left|\vec{Y}_{pipe}\right| \bullet \left|\vec{Y}_{model}\right| \bullet \cos\theta_{YY} = \cos\theta_{YY} \quad (5)$$

$$\vec{Y}_{pipe} \bullet \vec{Z}_{model} = \left|\vec{Y}_{pipe}\right| \bullet \left|\vec{Z}_{model}\right| \bullet \cos\theta_{YZ} = \cos\theta_{YZ} \quad (6)$$

$$\vec{Z}_{pipe} \bullet \vec{X}_{model} = \left|\vec{Z}_{pipe}\right| \bullet \left|\vec{X}_{model}\right| \bullet \cos\theta_{ZX} = \cos\theta_{ZX} \quad (7)$$

$$\vec{Z}_{pipe} \bullet \vec{Y}_{model} = \left|\vec{Z}_{pipe}\right| \bullet \left|\vec{Y}_{model}\right| \bullet \cos\theta_{ZY} = \cos\theta_{ZY} \quad (8)$$

$$\vec{Z}_{pipe} \bullet \vec{Z}_{model} = \left|\vec{Z}_{pipe}\right| \bullet \left|\vec{Z}_{model}\right| \bullet \cos\theta_{ZZ} = \cos\theta_{ZZ} \quad (9)$$

where $\vec{X}_{pipe}$, $\vec{Y}_{pipe}$ and $\vec{Z}_{pipe}$ represent a horizontal axis direction vector, a longitudinal axis direction vector, and a vertical axis direction vector of the pipeline system coordinate system respectively. $\vec{X}_{model}$, $\vec{Y}_{model}$ and $\vec{Z}_{model}$ represent a horizontal axis direction vector, a longitudinal axis direction vector and a vertical axis direction vector of the mechanical analysis model coordinate system respectively. $\theta_{ij}$ represents the included angle between the i-axis in the pipeline system coordinate system and the j-axis in the mechanical analysis model coordinate system. It should be appreciated that when a radian of the included angle is equal to $k\pi$, the two coordinate axes are considered to be parallel to each other; when the radian of the included angle is unequal to $k\pi$, the two coordinate axes are considered to be non-parallel to each other. k can be equal to 0 or 1. The parallel angle error is taken into account during the determination process, such as a parallel angle error of 2 degrees.

In an embodiment, the server may convert the original pipeline system load into the target pipeline system load in the mechanical analysis model coordinate system according to the conversion rules shown in Table 1 as follows. It should be appreciated that when the included angle is equal to 180 degrees, the two coordinate axes are parallel to each other, but have opposite directions. When assigning the original pipeline load value to the coordinate axis in the mechanical analysis model coordinate system, the server assigns the value in the opposite direction of the corresponding coordinate axis.

Table 1

| $\theta_{ij}$ condition | Direction of original pipeline system load | Directions in mechanical analysis model coordinate system | Explanation |
|---|---|---|---|
| $\theta_{XX} = 0$ | X | X | value of original pipeline system load in direction X is applied to direction X in mechanical analysis model co-ordinate system |
| $\theta_{XX} = \pi$ | X | -X | value of original pipeline system load in direction X is applied to direction -X in mechanical analysis model coordinate system |
| $\theta_{XY} = 0$ | X | Y | value of original pipeline system load in direction X is applied to direction Y in mechanical analysis model co-ordinate system |

(continued)

| $\theta_{ij}$ condition | Direction of original pipeline system load | Directions in mechanical analysis model coordinate system | Explanation |
|---|---|---|---|
| $\theta_{XY} = \pi$ | X | -Y | value of original pipeline system load in direction X is applied to direction -Y in mechanical analysis model coordinate system |
| $\theta_{XZ} = 0$ | X | Z | value of original pipeline system load in direction X is applied to direction Z in mechanical analysis model coordinate system |
| $\theta_{XZ} = \pi$ | X | -Z | value of original pipeline system load in direction X is applied to direction -Z in mechanical analysis model coordinate system |
| $\theta_{YX} = 0$ | Y | X | value of original pipeline system load in direction Y is applied to direction X in mechanical analysis model coordinate system |
| $\theta_{YX} = \pi$ | Y | -X | value of original pipeline system load in direction Y is applied to direction -X in mechanical analysis model coordinate system |
| $\theta_{YY} = 0$ | Y | Y | value of original pipeline system load in direction Y is applied to direction Y in mechanical analysis model coordinate system |
| $\theta_{YY} = \pi$ | Y | -Y | value of original pipeline system load in direction Y is applied to direction -Y in mechanical analysis model coordinate system |
| $\theta_{YZ} = 0$ | Y | Z | value of original pipeline system load in direction Y is applied to direction Z in mechanical analysis model coordinate system |
| $\theta_{YZ} = \pi$ | Y | -Z | value of original pipeline system load in direction Y is applied to direction -Z in mechanical analysis model coordinate system |
| $\theta_{ZX} = 0$ | 7 | X | value of original pipeline system load in direction Z is applied to direction X in mechanical analysis model coordinate system |
| $\theta_{ZX} = \pi$ | Z | -X | value of original pipeline system load in direction Z is applied to direction -X in mechanical analysis model coordinate system |
| $\theta_{ZY} = 0$ | 7 | Y | value of original pipeline system load in direction Z is applied to direction Y in mechanical analysis model coordinate system |
| $\theta_{ZY} = \pi$ | Z | -Y | value of original pipeline system load in direction Z is applied to direction -Y in mechanical analysis model coordinate system |
| $\theta_{ZZ} = 0$ | Z | Z | value of original pipeline system load in direction Z is applied to direction Z in mechanical analysis model coordinate system |
| $\theta_{ZZ} = \pi$ | Z | -Z | value of original pipeline system load in direction Z is applied to direction -Z in mechanical analysis model coordinate system |

In the embodiment, the included angle between each coordinate axis in the pipeline system coordinate system and each coordinate axis in the mechanical analysis model coordinate system are determined respectively to obtain a plurality of included angles; it is determined whether at least two coordinate axes in the mechanical analysis model coordinate system are parallel to the coordinate axes in the pipeline system coordinate system respectively according to the plurality of included angles and the preset parallel angle error; and the mechanical analysis model coordinate system is determined to be parallel to the pipeline system coordinate system when at least two coordinate axes in the mechanical analysis model coordinate system are parallel to the coordinate axes in the pipeline system coordinate system respectively. Accordingly, the original pipeline system load can be converted to the target pipeline system load in the mechanical analysis model coordinate system to improve the accuracy of the mechanical analysis processing.

In an embodiment, the original pipeline system load may include an original pipeline load value corresponding to a direction of each coordinate axis in the pipeline system coordinate system, and the step of converting the original pipeline system load into the target pipeline system load in the mechanical analysis model coordinate system may include: when the pipeline system coordinate system is unparallel to the mechanical analysis model coordinate system, for original pipeline load values corresponding to the directions of coordinate axes in the pipeline system coordinate system, the original pipeline load values are decomposed and combined according to the directions of the coordinate axes in the mechanical analysis model coordinate system to obtain load envelope values in the directions of the coordinate axes in the mechanical analysis model coordinate system; the target pipeline system load in the mechanical analysis model coordinate system includes the load envelope values in the directions of the coordinate axes in the mechanical analysis model coordinate system.

Specifically, when the pipeline system coordinate system is unparallel to the mechanical analysis model coordinate system, for the original pipeline load values corresponding to the directions of the coordinate axes in the pipeline system coordinate system, the server may decompose and combine the original pipeline load values according to the directions of the coordinate axes in the mechanical analysis model coordinate system, and obtain the load envelope values in the directions of the coordinate axes in the mechanical analysis model coordinate system. It should be appreciated that the original pipeline system load may include a force and a torque. When the pipeline system coordinate system includes the horizontal axis, the longitudinal axis and the vertical axis, the force and the torque of the original pipeline system load have maximum and minimum values in the direction of the horizontal axis, the direction of the longitudinal axis and the direction of the vertical axis respectively. It should be appreciated that the original pipeline system load may include original pipeline load values corresponding to 6 directions respectively, so that there are 64 combinations of the original pipeline load values. Actually, these 64 combinations cannot occur simultaneously. Accordingly, the server can determine the envelope values of 64 combinations of the original pipeline load values, and obtain the load envelope values in the directions of the coordinate axes in the mechanical analysis model coordinate system.

In the embodiment, when the pipeline system coordinate system is unparallel to the mechanical analysis model coordinate system, for the original pipeline load values corresponding to the directions of the coordinate axes in the pipeline system coordinate system, the original pipeline load values are decomposed and combined according to the directions of the coordinate axes in the mechanical analysis model coordinate system, and the load envelope values in the directions of the coordinate axes in the mechanical analysis model coordinate system are obtained. Accordingly, it is possible to use different computation modes based on the mechanical analysis model coordinate system to obtain the target pipeline system load. Compared to the mode of directly using the global coordinate system to indistinguishably decompose and combine the original pipeline load to compute the load envelope value, the cost of the computation of the target pipeline system load can be reduced while the accuracy is improved.

In an embodiment, the global coordinate system may include the horizontal axis, the longitudinal axis and the vertical axis, and the step that the coordinate axes matching the coordinate axes in the global coordinate system of the nuclear power plant respectively are determined from the coordinate axes in the overall local coordinate system of the target support member respectively, and the mechanical analysis model coordinate system with the directions approaching the directions of the global coordinate system is constructed according to the directions of the matched coordinate axes, may include: coordinate axes respectively matching the horizontal axis, the longitudinal axis and the vertical axis in the global coordinate system in a maximum matching degree are determined from the coordinate axes in the overall local coordinate system of the target support member; the direction of the horizontal axis in the mechanical analysis model coordinate system is determined according to a direction of a coordinate axis in the overall local coordinate system matching the horizontal axis in the global coordinate system in the maximum matching degree, the direction of the longitudinal axis in the mechanical analysis model coordinate system is determined according to a direction of a coordinate axis in the overall local coordinate system matching the longitudinal axis in the global coordinate system in the maximum matching degree, and the direction of the vertical axis in the mechanical analysis model coordinate system is determined according to a direction of a coordinate axis in the overall local coordinate system matching the vertical axis in the global coordinate system in the maximum matching degree, to construct the mechanical analysis model coordinate system with the directions approaching the directions of the global coordinate system.

Specifically, the server may determine, from the coordinate axes in the overall local coordinate system of the target support member, the coordinate axes respectively matching the horizontal axis, the longitudinal axis, and the vertical axis in the global coordinate system in the maximum matching degree. The server may determine direction vector information of the overall local coordinate system, determine direction vector information of the horizontal axis in the mechanical analysis model coordinate system according to direction vector information of a coordinate axis in the overall local coordinate system matching the horizontal axis in the global coordinate system in the maximum matching degree, determine direction vector information of the longitudinal axis in the mechanical analysis model coordinate system according to direction vector information of a coordinate axis in the overall local coordinate system matching the longitudinal axis in the global coordinate system in the maximum matching degree, and determine direction vector information of the vertical axis in the mechanical analysis model coordinate system according to direction vector information of a coordinate axis in the overall local coordinate system matching the vertical axis in the global coordinate system in the maximum matching degree, to construct the mechanical analysis model coordinate system with the directions approaching the directions of the global coordinate system.

In the embodiment, the coordinate axes matching the coordinate axes in the global coordinate system of the nuclear power plant respectively are determined from the coordinate axes in the overall local coordinate system of the target support member respectively, and the mechanical analysis model coordinate system with the directions approaching the directions of the global coordinate system is constructed according to the directions of the matched coordinate axes. Accordingly, the mechanical analysis processing can be performed on the target support member based on the mechanical model coordinate system, and the accuracy is improved. Furthermore, since the matching degree between the mechanical analysis model coordinate system and the global coordinate system is higher, the readability of the mechanical analysis model constructed based on the mechanical analysis model coordinate system can be guaranteed.

In an embodiment, the step that coordinate axes respectively matching the horizontal axis, the longitudinal axis and the vertical axis in the global coordinate system in the maximum matching degree are determined from the coordinate axes in the overall local coordinate system of the target support member may include: a direction cosine value between each coordinate axis in the overall local coordinate system and each of the horizontal axis, the longitudinal axis, and the vertical axis in the global coordinate system is computed respectively; a coordinate axis with the maximum absolute value of the direction cosine value with respect to each coordinate axis in the global coordinate system is determined from the coordinate axes in the overall local coordinate system, and the coordinate axes matching the coordinate axes in the global coordinate system in the maximum matching degree respectively are obtained.

Specifically, the matching degree can be evaluated by the direction cosine value between two coordinate axes. The server may respectively compute the direction cosine value between each coordinate axis in the global local coordinate system and each of the horizontal axis, the longitudinal axis, and the vertical axis in the global coordinate system. It should be appreciated that the direction cosine value can evaluate the matching degree between the two coordinate axes. The larger the absolute value of the direction cosine value, the closer the two coordinate axes are to parallel. The server can determine a coordinate axis with the maximum absolute value of the direction cosine value with respect to each coordinate axis in the global coordinate system from the coordinate axes in the overall local coordinate system, and the coordinate axes matching the coordinate axes in the global coordinate system in the maximum matching degree respectively are obtained.

In the embodiment, the direction cosine value between the two coordinate axes is adopted to determine the coordinate axes matching the coordinate axes in the global coordinate system of the nuclear power plant respectively from the coordinate axes in the overall local coordinate system of the target support member, and the mechanical analysis model coordinate system with the directions approaching the directions of the global coordinate system is constructed according to the directions of the matched coordinate axes, so that the mechanical analysis processing can be performed on the target support member based on the mechanical analysis model coordinate system, and the accuracy is improved. Furthermore, since the directions of the mechanical analysis model coordinate system approach those of the global coordinate system, the readability of the mechanical analysis model constructed based on the mechanical analysis model coordinate system can be guaranteed.

In an embodiment, the method may further include: the direction vector information of the pipeline system coordinate system extracted from the original pipeline system load and the direction vector information of the overall local coordinate system of the target support member are acquired; the direction vector information of the pipeline system coordinate system and the direction vector information of the overall local coordinate system are determined with the global coordinate system of the nuclear power plant as a reference coordinate system. The step that the coordinate axes matching the coordinate axes in the global coordinate system of the nuclear power plant respectively are determined from the coordinate axes in the overall local coordinate system of the target support member, and the mechanical analysis model coordinate system with the directions approaching the directions of the global coordinate system according to the directions of the matched coordinate axes, may include: the matching degree between each coordinate axis in the overall local coordinate system and each coordinate axis in the global coordinate system is computed respectively according to the direction vector information of the overall local coordinate system and the direction vector information of the global coordinate system, and the mechanical analysis model coordinate system with the directions approaching the directions of the global coordinate system is constructed according to the directions of the coordinate axes with the maximum matching degrees.

In an embodiment, the server may compute the original pipeline system load of the pipeline system supported by the target support member according to the geometric model of the target support member through a pipeline computation program. The pipeline computation program can compute the original pipeline system load, and encapsulate a direction of the original pipeline system load and an original pipeline load value corresponding to the direction into a load result file. The server can acquire the load result file, and extract the direction vector information of the original pipeline system load and the original pipeline load value corresponding to the direction vector from the load result file. The direction of the original pipeline system load is substantially a direction in which the support member applies the support and the constraint on the pipeline. The original pipeline system load is a load of the pipeline on the target support member. The pipeline computation program can be software for specially analyzing the pipeline in the geometric model, and is configured to compute the load of the pipeline system on the target support member.

Specifically, the server may acquire the direction vector information of the original pipeline system load and the original pipeline system load value corresponding to the direction vector through the pipeline computation program. The server may use a direction vector of the original pipeline system load as a direction vector of the coordinate axis in the pipeline system coordinate system. The server can acquire the direction vector information of the overall local coordinate system of the target support member through a three-dimensional modeling platform. The server can determine the direction cosine value of each coordinate axis in the overall local coordinate system and each coordinate axis in the global coordinate system from the direction vector information of the overall local coordinate system, and construct the mechanical analysis model coordinate system with the directions approaching the directions of the global coordinate system according to the directions of the coordinate axes each having the maximum absolute value of the direction cosine value. It should be appreciated that the direction vectors of the global local coordinate system are obtained by taking the global coordinate system as the reference coordinate system, and a direction vector of a coordinate axis in the global local coordinate system includes a direction cosine value with respect to each coordinate axis in the global coordinate system.

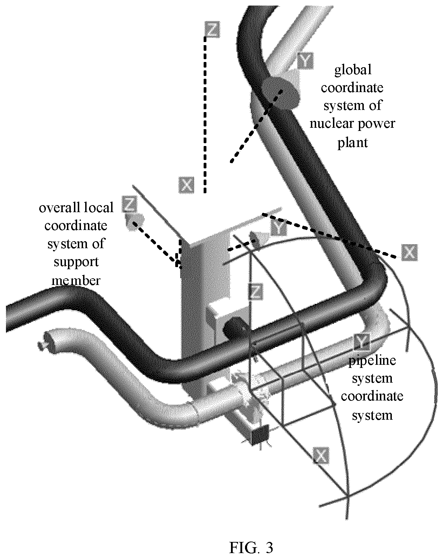

In an embodiment, FIG. 3 shows a schematic diagram of the overall local coordinate system, the global coordinate system and the pipeline system coordinate system in the geometric model. The server can determine the overall local coordinate system of the target support member and the global coordinate system of the nuclear power plant through the three-dimensional modeling platform. The server can determine the pipeline system coordinate system through the pipeline computation program. It should be appreciated that the overall local coordinate system is a coordinate system established by the three-dimensional modeling platform for the target support member as a whole. The global coordinate system is a coordinate system established by the three-dimensional modeling platform for the nuclear power plant as a whole.

In an embodiment, the server can acquire the direction vector information of the pipeline system coordinate system through the pipeline computation program (as shown in Table 2), and acquire the direction vector information of the overall local coordinate system (as shown in Table 3) and the direction vector information of the pipe clamp local coordinate system (as shown in Table 4) through the three-dimensional modeling platform. It should be appreciated that the support member supports and constrains the pipeline system through the pipe clamp, so that the direction vectors of the pipe clamp local coordinate system are usually parallel to the direction vectors of the pipeline system coordinate system respectively.

Table 2

| Direction | $X_{pipe}$ | $Y_{pipe}$ | $Z_{pipe}$ |
|---|---|---|---|
| Format | $(\alpha_1, \alpha_2, \alpha_3)$ | $(\beta_1\ \beta_2, \beta_3)$ | $(\gamma_1, \gamma_2, \gamma_3)$ |
| Example | (0.789,-0.614,0) | (0.614, 0.789,0) | (0,0,1) |

where $\vec{X}_{pipe}$, $\vec{Y}_{pipe}$, and $\vec{Z}_{pipe}$ respectively represent the direction of the horizontal axis, the direction of the longitudinal axis, and the direction of the vertical axis in the pipeline system coordinate system.

Table 3

| Direction | $X_{sup}$ | $Y_{sup}$ | $Z_{sup}$ |
|---|---|---|---|
| Format | $\alpha_1, \alpha_2, \alpha_3)$ | $(\beta_1, \beta_2, \beta_3)$ | $(\gamma_1, \gamma_2, \gamma_3)$ |
| Example | (-0.614, -0.789,0) | (0.789,-0.614,0) | (0,0,1) |

where $\vec{X}_{sup}$, $\vec{Y}_{sup}$, and $\vec{Z}_{sup}$ respectively represent the direction of the horizontal axis, the direction of the longitudinal axis, and the direction of the vertical axis in the overall local coordinate system.

Table 4

| Direction | $X_{atta}$ | $Y_{atta}$ | $Z_{atta}$ |
|---|---|---|---|
| Format | $(\alpha_1, \alpha_2, \alpha_3)$ | $(\beta_1, \beta_2, \beta_3)$ | $(\gamma_1, \gamma_2, \gamma_3)$ |
| Example | (0.789,-0.614,0) | (0.614, 0.789,0) | (0,0,1) |

where $\vec{X}_{atta}$, $\vec{Y}_{atta}$, and $\vec{Z}_{atta}$ respectively represent the direction of the horizontal axis, the direction of the longitudinal axis, and the direction of the vertical axis in the pipe clamp local coordinate system.

In the embodiment, the mechanical analysis model coordinate system with directions approaching the directions of the global coordinate system is constructed based on the direction vector information of the pipeline system coordinate system extracted from the original pipeline system load and the direction vector information of the overall local coordinate system of the target support member, so that the mechanical analysis processing is performed in the mechanical analysis model coordinate system, thereby improving the accuracy of the mechanical analysis processing. Furthermore, since the directions of the mechanical analysis model coordinate system approach the directions of the global coordinate system, the readability of the mechanical analysis model constructed based on the mechanical analysis model coordinate system is guaranteed.

In an embodiment, the method may further include: for the target support member in the nuclear power plant, a key point coordinate of the target support member in the overall local coordinate system is determined; the key point includes a point for reflecting a shape characteristic and a point for reflecting a force transmission characteristic of the target support member. The step that the mechanical analysis model of the target support member is constructed based on the mechanical analysis model coordinate system may include: the key point coordinate is converted into the mechanical analysis model coordinate system and a node coordinate of the mechanical analysis model is obtained, to construct the mechanical analysis model according to the node coordinate.

The node coordinate is a coordinate of the key point in the mechanical analysis model coordinate system.

In an embodiment, the key point may include multiple of an anchor point of a support member, a pipeline support point, a connection point between steel sections, etc.

In an embodiment, a key point format in the overall local coordinate system is shown in Table 5:

Table 5

| Direction | X | Y | Z |
|---|---|---|---|
| Format | x | y | z |
| Example | 100 | 200 | 300 |

where the directions X, Y and Z represent the direction of the horizontal axis, the direction of the longitudinal axis, and the direction of the vertical axis in the overall local coordinate system, respectively. The formats x, y and z represent coordinate values of the horizontal axis, the longitudinal axis, and the vertical axis in the overall local coordinate system respectively.

Specifically, the server may establish geometric models of the target support member and the pipeline system supported by the target support member through the three-dimensional modeling platform. The user can trigger the server through the terminal to perform the mechanical analysis processing on the target support member, and the server can determine the key point coordinate of the target support member in the overall local coordinate system from the geometric model of the target support member through the three-dimensional modeling platform. The server can convert the key point coordinate into the mechanical analysis model coordinate system and obtain the node coordinate of the mechanical analysis model, to construct the mechanical analysis model according to the node coordinate.

In an embodiment, the three-dimensional modeling platform may be a Plant Design Management System (PDMS). The PDMS is a three-dimensional modeling software commonly used in the nuclear power plant design.

In an embodiment, the server may determine the direction vectors of the mechanical analysis model coordinate system and the node coordinates of the mechanical analysis model according to the matching rules in Table 6.

Table 6

| | Cosine value with maximum absolute value (when equal, select in order 1, 2, 3) | Cosine value symbol | Key point coordinate | Node coordinate of mechanical analysis model | Explanation |
|---|---|---|---|---|---|
| $\alpha$ | $\alpha_1$ | + | x | X | X-direction coordinate of mechanical analysis model coordinate system is filled with coordinate value x, direction vector of X-axis of mechanical analysis model coordinate system is ($\alpha_1$, $\alpha_2$, $\alpha_3$) |
| | $\alpha_1$ | - | x | -X | X-direction coordinate of mechanical analysis model coordinate system is filled with coordinate value -x, direction vector of X-axis of mechanical analysis model coordinate system is (-$\alpha_1$,-$\alpha_2$,-$\alpha_3$) |
| | $\alpha_2$ | + | x | Y | Y-direction coordinate of mechanical analysis model coordinate system is filled with coordinate value x, direction vector of Y-axis of mechanical analysis model coordinate system is ($\alpha_1$, $\alpha_2$, $\alpha_3$) |
| | $\alpha_2$ | - | x | -Y | Y-direction coordinate of mechanical analysis model coordinate system is filled with coordinate value -x, direction vector of Y-axis of mechanical analysis model coordinate system is (-$\alpha_1$,-$\alpha_2$,-$\alpha_3$) |
| | $\alpha_3$ | + | x | Z | Z-direction coordinate of mechanical analysis model coordinate system is filled with coordinate value x; direction vector of Z-axis of mechanical analysis model coordinate system is ($\alpha_1$, $\alpha_2$, $\alpha_3$) |
| | $\alpha_3$ | - | x | -Z | Z-direction coordinate of mechanical analysis model coordinate system is filled with coordinate value -x; direction vector of Y-axis of mechanical analysis model coordinate system is (-$\alpha_1$,-$\alpha_2$,-$\alpha_3$) |

(continued)

| | Cosine value with maximum absolute value (when equal, select in order 1, 2, 3) | Cosine value symbol | Key point coordinate | Node coordinate of mechanical analysis model | Explanation |
|---|---|---|---|---|---|
| β | $\beta_1$ | + | y | X | X-direction coordinate of mechanical analysis model coordinate system is filled with coordinate value y; direction vector of X-axis of mechanical analysis model coordinate system is ($\beta_1, \beta_2, \beta_3$) |
| | $\beta_1$ | - | y | -X | X-direction coordinate of mechanical analysis model coordinate system is filled with coordinate value -y; direction vector of X-axis of mechanical analysis model coordinate system is ($-\beta_1, -\beta_2, -\beta_3$) |
| | $\beta_2$ | + | y | Y | Y-direction coordinate of mechanical analysis model coordinate system is filled with coordinate value y; direction vector of Y-axis of mechanical analysis model coordinate system is ($\beta_1, \beta_2, \beta_3$) |
| | $\beta_2$ | | y | -Y | Y-direction coordinate of mechanical analysis model coordinate system is filled with coordinate value -y; direction vector of Y-axis of mechanical analysis model coordinate system is ($\beta_1, -\beta_2, -\beta_3$) |
| | $\beta_3$ | + | y | Z | Z-direction coordinate of mechanical analysis model coordinate system is filled with coordinate value y; direction vector of Z-axis of mechanical analysis model coordinate system is ($\beta_1, \beta_2, \beta_3$) |
| | $\beta_3$ | - | y | -Z | Z-direction coordinate of mechanical analysis model coordinate system is filled with coordinate value -y; direction vector of Z-axis of mechanical analysis model coordinate system is ($-\beta_1, -\beta_2, -\beta_3$) |
| γ | $\gamma_1$ | + | z | X | X-direction coordinate of mechanical analysis model coordinate system is filled with coordinate value z; direction vector of X-axis of mechanical analysis model coordinate system is ($\gamma_1, \gamma_2, \gamma_3$) |
| | $\gamma_1$ | - | z | -X | X-direction coordinate of mechanical analysis model coordinate system is filled with coordinate value -z; direction vector of X-axis of mechanical analysis model coordinate system is ($-\gamma_1, -\gamma_2, -\gamma_3$) |
| | $\gamma2$ | + | z | Y | Y-direction coordinate of mechanical analysis model coordinate system is filled with coordinate value z; direction vector of Y-axis of mechanical analysis model coordinate system is ($\gamma_1, \gamma_2, \gamma_3$) |
| | $\gamma_2$ | - | z | -Y | Y-direction coordinate of mechanical analysis model coordinate system is filled with coordinate value -z; direction vector of Y-axis of mechanical analysis model coordinate system is ($-\gamma_1, -\gamma_2, -\gamma_3$) |
| | $\gamma_3$ | + | z | Z | Z-direction coordinate of mechanical analysis model coordinate system is filled with coordinate value z; direction vector of Z-axis of mechanical analysis model coordinate system is ($\gamma_1, \gamma_2, \gamma_3$) |

(continued)

| Cosine value with maximum absolute value (when equal, select in order 1, 2, 3) | Cosine value symbol | Key point coordinate | Node coordinate of mechanical analysis model | Explanation |
|---|---|---|---|---|
| $\gamma_3$ | - | z | -Z | Z-direction coordinate of mechanical analysis model coordinate system is filled with coordinate value -z; direction vector of Z-axis of mechanical analysis model coordinate system is $(-\gamma_1,-\gamma_2,-\gamma_3)$ |

where $\alpha_1$, $\alpha_2$ and $\alpha_3$ are used for characterizing the included angles between the horizontal axis in the overall local coordinate system and the horizontal, longitudinal and vertical axes in the global coordinate system respectively. $\beta_1$, $\beta_2$ and $\beta_3$ are used for characterizing the included angles between the longitudinal axis in the overall local coordinate system and the horizontal, longitudinal and vertical axes in the global coordinate system respectively. $\gamma_1$, $\gamma_2$ and $\gamma_3$ are used for characterizing the included angles between the vertical axis in the overall local coordinate system and the horizontal, longitudinal and vertical axes in the global coordinate system respectively. X, Y, and Z are used for representing the horizontal, longitudinal, and vertical axes, respectively.

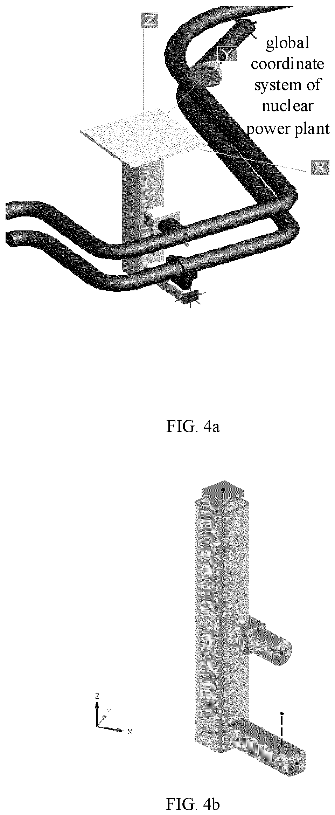

In an embodiment, FIGS. 4a and 4b show schematic diagrams of a geometric model and a mechanical analysis model of a target support member. The server can load the mechanical analysis model according to the node coordinates of the mechanical analysis model through the mechanical analysis program. Since the directions of the mechanical analysis model coordinate system match the directions of the global coordinate system, the constructed mechanical analysis model has better readability. The mechanical analysis program can be software specially for the mechanical analysis model construction and mechanical computation.

In the embodiment, for the target support member in the nuclear power plant, the key point coordinate of the target support member in the overall local coordinate system is determined, the key point coordinate is converted into the mechanical analysis model coordinate system and the node coordinate of the mechanical analysis model is obtained, to construct the mechanical analysis model according to the node coordinate. Since the coordinate axes in the mechanical analysis model coordinate system are determined from the coordinate axes in the overall local coordinate system, and the directions thereof match the directions of the coordinate axes in the global coordinate system of the nuclear power plant, the readability of the mechanical analysis model is guaranteed while the accuracy of the mechanical analysis processing is improved.

It should be appreciated that although the steps in the flow charts involved in the embodiments described above are displayed sequentially as indicated by the arrows, these steps are not definitely executed sequentially in the order indicated by the arrows. Unless otherwise specified herein, there is no strict order limitation to the execution of these steps, and these steps may be executed in other orders. Moreover, at least a part of the steps in the flow charts involved in the embodiments described above may include multiple steps or multiple stages. These steps or stages are not definitely executed at the same time, but can be executed at different moments. The execution order of these steps or stages is not definitely sequential, but can be executed in turn or alternately with other steps or at least part of the steps or stages in other steps.

Based on the same inventive concept, an embodiment of the present invention further provides a mechanical analysis processing apparatus for a support member used in a nuclear power plant for implementing the above-mentioned mechanical analysis processing method for the support member used in the nuclear power plant. The solution to the problem provided by the apparatus is similar to the solution described in the above method, as for the specific limitations in one or more embodiments of the mechanical analysis processing apparatus for the support member used in the nuclear power plant provided below, reference can be made to the limitations on the mechanical analysis processing method for the support member used in the nuclear power plant.

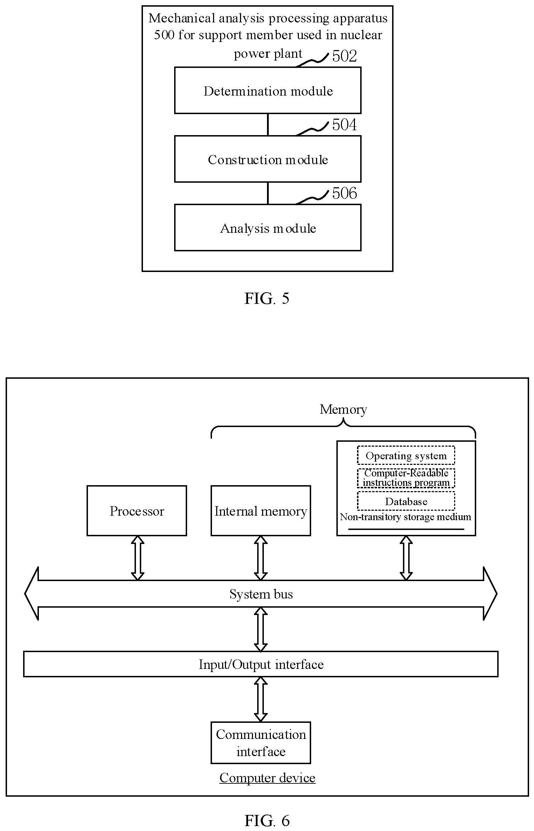

In an embodiment, as shown in FIG. 5, a mechanical analysis processing apparatus 500 for a support member used in a nuclear power plant is provided, which includes: a determination module 502, a construction module 504, and an analysis module 506.

The determination module 502 is configured to, for a target support member used in the nuclear power plant, determine an original pipeline system load of a pipeline system supported by the target support member in a pipeline system coordinate system.

The construction module 504 is configured to determine coordinate axes matching coordinate axes in a global coordinate system of the nuclear power plant respectively from coordinate axes in an overall local coordinate system of the target support member, construct a mechanical analysis model coordinate system with directions approaching directions of the global coordinate system according to directions of the matched coordinate axes, and construct a mechanical analysis model of the target support member based on the mechanical analysis model coordinate system.

The analysis module 506 is configured to convert the original pipeline system load into a target pipeline system load in the mechanical analysis model coordinate system, to allow the mechanical analysis model to perform mechanical analysis processing based on the target pipeline system load.

In an embodiment, the original pipeline system load may include an original pipeline load value corresponding to a direction of each coordinate axis in the pipeline system coordinate system. The target pipeline system load may include a target pipeline load value corresponding to a direction of each coordinate axis in the mechanical analysis model coordinate system. The analysis module 506 is further configured to: when the pipeline system coordinate system is parallel to the mechanical analysis model coordinate system, for the original pipeline load value corresponding to the direction of each coordinate axis in the pipeline system coordinate system, assign the original pipeline load value to a parallel coordinate axis in the mechanical analysis model coordinate system, and obtain a target pipeline load value corresponding to a direction of the parallel coordinate axis. The parallel coordinate axis refers to a coordinate axis in the mechanical analysis model coordinate system that is parallel to the direction of the coordinate axis.

In an embodiment, the pipeline system coordinate system may include a horizontal axis, a longitudinal axis and a vertical axis. The analysis module 506 is further configured to: when the pipeline system coordinate system is parallel to the mechanical analysis model coordinate system, assign an original pipeline load value in the original pipeline system load corresponding to a direction of the horizontal axis in the pipeline system coordinate system to a coordinate axis in the mechanical analysis model coordinate system parallel to the direction of the horizontal axis, assign an original pipeline load value in the original pipeline system load corresponding to a direction of the longitudinal axis in the pipeline system coordinate system to a coordinate axis in the mechanical analysis model coordinate system parallel to the direction of the longitudinal axis, and assign an original pipeline load value in the original pipeline system load corresponding to a direction of the vertical axis in the pipeline system coordinate system to a coordinate axis in the mechanical analysis model coordinate system parallel to the direction of the vertical axis.

In an embodiment, the analysis module 506 is further configured to: when the number of coordinate axes in the pipeline system coordinate system is less than the number of coordinate axes in the mechanical analysis model coordinate system, determine a pipe clamp local coordinate system of a target pipe clamp corresponding to the original pipeline system load, the target pipe clamp being configured to connect the target support member to the pipeline system, the number of coordinate axes in the pipe clamp local coordinate system being consistent with the number of coordinate axes in the mechanical analysis model coordinate system, and the pipe clamp local coordinate system including coordinate axes each parallel to each coordinate axis in the pipeline system coordinate system; when the pipe clamp local coordinate system is parallel to the mechanical analysis model coordinate system, assign original pipeline load values to the coordinate axes in the mechanical analysis model coordinate system parallel to the coordinate axes in the pipe clamp local coordinate system according to a parallel relationship between the pipeline system coordinate system and the pipe clamp local coordinate system, and obtain target pipeline load values corresponding to directions of the parallel coordinate axes.

In an embodiment, the analysis module 506 is further configured to: determine an included angle between each coordinate axis in the pipeline system coordinate system and each coordinate axis in the mechanical analysis model coordinate system respectively, obtain a plurality of included angles, determine whether at least two coordinate axes in the mechanical analysis model coordinate system are respectively parallel to the coordinate axes in the pipeline system coordinate system according to the plurality of included angles and a preset parallel angle error, and determine the mechanical analysis model coordinate system to be parallel to the pipeline system coordinate system when at least two coordinate axes in the mechanical analysis model coordinate system are respectively parallel to the coordinate axes in the pipeline system coordinate system.

In an embodiment, the original pipeline system load may include an original pipeline load value corresponding to a direction of each coordinate axis in the pipeline system coordinate system. The analysis module 506 is further configured to: when the pipeline system coordinate system is unparallel to the mechanical analysis model coordinate system, for original pipeline load values corresponding to the directions of coordinate axes in the pipeline system coordinate system, decompose and combine the original pipeline load values according to the directions of the coordinate axes in the mechanical analysis model coordinate system to obtain load envelope values in the directions of the coordinate axes in the mechanical analysis model coordinate system. The target pipeline system load in the mechanical analysis model coordinate system includes the load envelope values in the directions of the coordinate axes in the mechanical analysis model coordinate system.

In an embodiment, the global coordinate system may include the horizontal axis, the longitudinal axis and the vertical axis. The construction module 504 is further configured to: determine coordinate axes respectively matching the horizontal axis, the longitudinal axis and the vertical axis in the global coordinate system in a maximum matching degree from the coordinate axes in the overall local coordinate system of the target support member; determine the direction of the horizontal axis in the mechanical analysis model coordinate system according to a direction of a coordinate axis in the overall local coordinate system matching the horizontal axis in the global coordinate system in the maximum matching degree, determine the direction of the longitudinal axis in the mechanical analysis model coordinate system according to a direction of a coordinate axis in the overall local coordinate system matching the longitudinal axis in the global coordinate system in the maximum matching degree, and determine the direction of the vertical axis in the mechanical analysis model coordinate system according to a direction of a coordinate axis in the overall local coordinate system matching the vertical axis in the global coordinate system in the maximum matching degree, to construct the mechanical analysis model coordinate system with the directions approaching the directions of the global coordinate system.

In an embodiment, the construction module 504 is further configured to: compute a direction cosine value between each coordinate axis in the overall local coordinate system and each of the horizontal axis, the longitudinal axis, and the vertical axis in the global coordinate system respectively; determine a coordinate axis with the maximum absolute value of the direction cosine value with respect to each coordinate axis in the global coordinate system from the coordinate axes in the overall local coordinate system, and obtain the coordinate axes matching the coordinate axes in the global coordinate system in the maximum matching degree respectively.

In an embodiment, the determination module 502 is further configured to acquire the direction vector information of the pipeline system coordinate system extracted from the original pipeline system load and the direction vector information of the overall local coordinate system of the target support member. The direction vector information of the pipeline system coordinate system and the direction vector information of the overall local coordinate system are determined with the global coordinate system of the nuclear power plant as a reference coordinate system. The construction module 504 is further configured to compute a matching degree between each coordinate axis in the overall local coordinate system and each coordinate axis in the global coordinate system respectively according to the direction vector information of the overall local coordinate system and the direction vector information of the global coordinate system, and construct the mechanical analysis model coordinate system with the directions approaching the directions of the global coordinate system according to the directions of the coordinate axes with the maximum matching degrees.

In an embodiment, the determination module 502 is configured to, for the target support member in the nuclear power plant, determine a key point coordinate of the target support member in the overall local coordinate system. The key point includes a point for reflecting a shape characteristic and a point for reflecting a force transmission characteristic of the target support member. The construction module 504 is configured to convert the key point coordinate into the mechanical analysis model coordinate system and obtain a node coordinate of the mechanical analysis model, to construct the mechanical analysis model according to the node coordinate.

Each module in the above-mentioned mechanical analysis processing apparatus for the support member used in the nuclear power plant can be fully or partially implemented by software, hardware, or a combination thereof. The above modules may be embedded in or independent of a processor in a computer device in the form of hardware, or may be stored in a memory in a computer device in the form of software, so that the processor can call and execute operations corresponding to the above modules.

In an embodiment, a computer device is provided. The computer device may be a server, and an internal structure diagram thereof may be as shown in FIG. 6. The computer device includes a processor, a memory, an Input/Output (I/O) interface and a communication interface. The processor, the memory and the input/output interface are connected to each other via a system bus, and the communication interface is connected to the system bus via the input/output interface. The processor of the computer device is configured to provide computing and control capabilities. The memory of the computer device includes a non-transitory storage medium and an internal memory. The non-transitory storage medium stores an operating system, computer-readable instructions, and a database. The internal memory provides an environment for the operation of the operating system and computer-readable instructions in the non-transitory storage medium. The database of the computer device is configured to store data related to the mechanical analysis processing. The input/output interface of the computer device is configured to exchange information between the processor and an external device. The communication interface of the computer device is configured to communicate with an external terminal via a network connection. When the computer-readable instructions are executed by the processor, a mechanical analysis processing method for a support member used in a nuclear power plant is implemented.

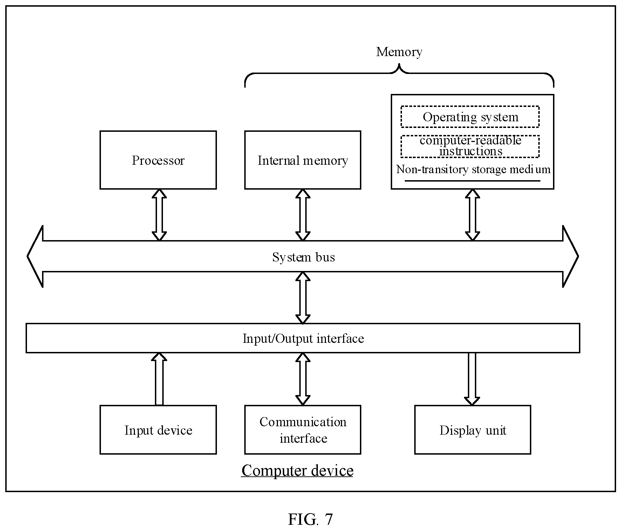

In an embodiment, a computer device is provided. The computer device may be a terminal, and an internal structure diagram thereof may be as shown in FIG. 7. The computer device may include a processor, a memory, an input/output interface, a communication interface, a display unit and an input device. The processor, the memory and the input/output interface are connected to each other via a system bus. The communication interface, the display unit and the input device are connected to the system bus via the input/output interface. The processor of the computer device is configured to provide computing and control capabilities. The memory of the computer device includes a non-transitory storage medium and an internal memory. The non-transitory storage medium stores an operating system and computer-readable instructions. The internal memory provides an environment for the operation of the operating system and computer-readable instructions in the non-transitory storage medium. The input/output interface of the computer device is configured to exchange information between the processor and an external device. The communication interface of the computer device is configured to communicate with an external terminal in a wired or wireless mode. The wireless mode can be implemented through WIFI, mobile cellular network, near field communication (NFC) or other technologies. When the computer-readable instructions are executed by a processor, a mechanical analysis processing method for a support member used in a nuclear power plant is implemented. The display unit of the computer device is configured to form a visually visible image, which can be a display screen, a projection device or a virtual reality imaging device. The display screen can be a liquid crystal display screen or an electronic ink display screen. The input device of the computer device can be a touch layer covering the display screen, or a button, trackball or touchpad set on a housing of the computer device, or an external keyboard, touchpad or mouse, etc.

Those skilled in the art should understand that the structures shown in FIGS. 6 and 7 are block diagrams of partial structures related to the solution of the present invention, and do not constitute a limitation on the computer device to which the solution of the present invention is applied. The specific computer device may include more or fewer components than those shown in the figures, or combine certain components, or have a different arrangement of components.

In an embodiment, a computer device is provided, which includes one or more processors and a memory storing computer-readable instructions, when executing the computer-readable instructions, the one or more processors may Implement the steps in the above-mentioned method embodiments.

In an embodiment, one or more computer-readable storage media are provided, on which computer-readable instructions are stored. The computer-readable instructions, when executed by one or more processors, may cause the one or more processor to implement the steps in the above-mentioned method embodiments.

In an embodiment, a computer program product is provided, including computer-readable instructions which, when executed by one or more processors, may cause the one or more processors to implement the steps in the above-mentioned method embodiments.

It should be noted that user information (including but not limited to user device information, user personal information, etc.) and data (including but not limited to data used for analysis, stored data, displayed data, etc.) involved in the present application are all information and data authorized by the user or fully authorized by all parties, and the collection, use and processing of relevant data definitely comply with relevant laws, regulations and standards of relevant countries and regions.

A person of ordinary skill in the art should understand that all or part of the processes in the above-mentioned embodiment methods can be implemented by instructing related hardware through computer-readable instructions. The computer-readable instructions can be stored in a non-transitory computer-readable storage medium. When the computer-readable instructions are executed, the processes of the embodiments of the above-mentioned methods may be included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational databases may include, but are not limited to, distributed databases based on blockchain. The processor involved in each embodiment provided in the present invention may be a general-purpose processor, a central processing unit, a graphics processor, a digital signal processor, a programmable logic unit, a data processing logic unit based on quantum computing, etc., but is not limited thereto.

The technical features of the above embodiments may be arbitrarily combined. To make the description concise, all possible combinations of the technical features in the above embodiments are not described. However, as long as there is no contradiction in the combinations of these technical features, these combinations should be considered to be within the scope of the present application.

The above-described embodiments merely express several implementation modes of the present application, and the description thereof is relatively specific and detailed, but it should not be construed as limiting the scope of the present application. It should be pointed out that, ordinary technicians in this field can make several modifications and improvements without departing from the concept of the present application, which all fall within the scope of protection of the present application. Therefore, the protection scope of the present application should be subject to the appended claims.

**Claims**

1. A mechanical analysis processing method for a support member used in a nuclear power plant, executed by a server, the method comprising:

for a target support member used in the nuclear power plant, determining an original pipeline system load of a pipeline system supported by the target support member in a pipeline system coordinate system;

determining coordinate axes matching coordinate axes in a global coordinate system of the nuclear power plant respectively from coordinate axes in an overall local coordinate system of the target support member, and constructing a mechanical analysis model coordinate system with directions approaching directions of the global coordinate system according to directions of the matched coordinate axes;

constructing a mechanical analysis model of the target support member based on the mechanical analysis model coordinate system;

converting the original pipeline system load into a target pipeline system load in the mechanical analysis model coordinate system, to allow the mechanical analysis model to perform mechanical analysis processing based on the target pipeline system load.

2. The method according to claim 1, wherein the original pipeline system load comprises an original pipeline load value corresponding to a direction of each coordinate axis in the pipeline system coordinate system, the target pipeline system load comprises a target pipeline load value corresponding to a direction of each coordinate axis in the mechanical analysis model coordinate system, the converting the original pipeline system load into the target pipeline system load in the mechanical analysis model coordinate system comprises:

when the pipeline system coordinate system is parallel to the mechanical analysis model coordinate system, for the original pipeline load value corresponding to the direction of each coordinate axis in the pipeline system coordinate system, assigning the original pipeline load value to a parallel coordinate axis in the mechanical analysis model coordinate system, to obtain a target pipeline load value corresponding to a direction of the parallel coordinate axis;

wherein the parallel coordinate axis refers to a coordinate axis in the mechanical analysis model coordinate system that is parallel to the direction of the coordinate axis.

3. The method according to claim 2, wherein the pipeline system coordinate system comprises a horizontal axis, a longitudinal axis and a vertical axis; wherein when the pipeline system coordinate system is parallel to the mechanical analysis model coordinate system, for the original pipeline load value corresponding to the direction of each coordinate axis in the pipeline system coordinate system, the assigning the original pipeline load value to a parallel coordinate axis in the mechanical analysis model coordinate system, to obtain a target pipeline load value corresponding to a direction of the parallel coordinate axis comprises:

when the pipeline system coordinate system is parallel to the mechanical analysis model coordinate system, assigning an original pipeline load value in the original pipeline system load corresponding to a direction of the horizontal axis in the pipeline system coordinate system to a coordinate axis in the mechanical analysis model coordinate system parallel to the direction of the horizontal axis;

assigning an original pipeline load value in the original pipeline system load corresponding to a direction of the longitudinal axis in the pipeline system coordinate system to a coordinate axis in the mechanical analysis model coordinate system parallel to the direction of the longitudinal axis;

assigning an original pipeline load value in the original pipeline system load corresponding to a direction of the vertical axis in the pipeline system coordinate system to a coordinate axis in the mechanical analysis model coordinate system parallel to the direction of the vertical axis.

4. The method according to claim 2, wherein when the pipeline system coordinate system is parallel to the mechanical analysis model coordinate system, for the original pipeline load value corresponding to the direction of each coordinate axis in the pipeline system coordinate system, the assigning the original pipeline load value to a parallel coordinate axis in the mechanical analysis model coordinate system, to obtain a target pipeline load value corresponding to a direction of the parallel coordinate axis comprises:

when the number of coordinate axes in the pipeline system coordinate system is less than the number of coordinate axes in the mechanical analysis model coordinate system, determining a pipe clamp local coordinate system of a target pipe clamp corresponding to the original pipeline system load, the target pipe clamp being configured to connect the target support member to the pipeline system, the number of coordinate axes in the pipe clamp local coordinate system being consistent with the number of coordinate axes in the mechanical analysis model coordinate system, and the pipe clamp local coordinate system comprising coordinate axes parallel to coordinate axes in the pipeline system coordinate system respectively;

when the pipe clamp local coordinate system is parallel to the mechanical analysis model coordinate system, assigning original pipeline load values to the coordinate axes in the mechanical analysis model coordinate system respectively parallel to the coordinate axes in the pipe clamp local coordinate system according to a parallel relationship between the pipeline system coordinate system and the pipe clamp local coordinate system, and obtaining target pipeline load values corresponding to directions of the parallel coordinate axes.

5. The method according to claim 2, further comprising:

determining an included angle between each coordinate axis in the pipeline system coordinate system and each coordinate axis in the mechanical analysis model coordinate system respectively, and obtaining a plurality of included angles;
determining whether at least two coordinate axes in the mechanical analysis model coordinate system are respectively parallel to the coordinate axes in the pipeline system coordinate system according to the plurality of included angles and a preset parallel angle error, and determining the mechanical analysis model coordinate system to be parallel to the pipeline system coordinate system when at least two coordinate axes in the mechanical analysis model coordinate system are respectively parallel to the coordinate axes in the pipeline system coordinate system.

6. The method according to claim 5, wherein the determining the included angle between each coordinate axis in the pipeline system coordinate system and each coordinate axis in the mechanical analysis model coordinate system respectively, and obtaining the plurality of included angles comprises:

performing a point-by-point multiplication on a direction vector of the pipeline system coordinate system and a direction vector of the mechanical analysis model coordinate system, computing a cosine value of the included angle between each coordinate axis in the pipeline system coordinate system and each coordinate axis in the mechanical analysis model coordinate system;
determining the included angle corresponding to the cosine value, and obtaining the plurality of included angles.

7. The method according to claim 1, wherein the original pipeline system load comprises an original pipeline load value corresponding to a direction of each coordinate axis in the pipeline system coordinate system, and wherein the converting the original pipeline system load into the target pipeline system load in the mechanical analysis model coordinate system comprises:

when the pipeline system coordinate system is unparallel to the mechanical analysis model coordinate system, for original pipeline load values corresponding to the directions of coordinate axes in the pipeline system coordinate system, decomposing and combining the original pipeline load values according to the directions of the coordinate axes in the mechanical analysis model coordinate system, and obtaining load envelope values in the directions of the coordinate axes in the mechanical analysis model coordinate system, wherein the target pipeline system load in the mechanical analysis model coordinate system comprises the load envelope values in the directions of the coordinate axes in the mechanical analysis model coordinate system.

8. The method according to claim 1, wherein the global coordinate system comprises a horizontal axis, a longitudinal axis and a vertical axis, wherein the determining the coordinate axes matching the coordinate axes in the global coordinate system of the nuclear power plant respectively from the coordinate axes in the overall local coordinate system of the target support member, and constructing the mechanical analysis model coordinate system with the directions approaching the directions of the global coordinate system according to directions of the matched coordinate axes comprises:

determining coordinate axes respectively matching the horizontal axis, the longitudinal axis and the vertical axis in the global coordinate system in a maximum matching degree from the coordinate axes in the overall local coordinate system of the target support member;
determining a direction of the horizontal axis in the mechanical analysis model coordinate system according to a direction of a coordinate axis in the overall local coordinate system matching the horizontal axis in the global coordinate system in the maximum matching degree;
determining a direction of the longitudinal axis in the mechanical analysis model coordinate system according to a direction of a coordinate axis in the overall local coordinate system matching the longitudinal axis in the global coordinate system in the maximum matching degree;
determining a direction of the vertical axis in the mechanical analysis model coordinate system according to a direction of a coordinate axis in the overall local coordinate system matching the vertical axis in the global coordinate system in the maximum matching degree, to construct the mechanical analysis model coordinate system with the directions approaching the directions of the global coordinate system.

9. The method according to claim 8, wherein the determining the coordinate axes respectively matching the horizontal axis, the longitudinal axis and the vertical axis in the global coordinate system in the maximum matching degree from the coordinate axes in the overall local coordinate system of the target support member comprises:

   computing a direction cosine value between each coordinate axis in the overall local coordinate system and each of the horizontal axis, the longitudinal axis, and the vertical axis in the global coordinate system respectively;
   determining a coordinate axis with a maximum absolute value of the direction cosine value with respect to each coordinate axis in the global coordinate system from the coordinate axes in the overall local coordinate system, and obtaining coordinate axes matching coordinate axes in the global coordinate system in the maximum matching degree respectively.

10. The method according to claim 1, further comprising:

   acquiring direction vector information of the pipeline system coordinate system extracted from the original pipeline system load and direction vector information of the overall local coordinate system of the target support member, wherein the direction vector information of the pipeline system coordinate system and the direction vector information of the overall local coordinate system are determined with the global coordinate system of the nuclear power plant as a reference coordinate system,
   wherein the determining the coordinate axes matching the coordinate axes in the global coordinate system of the nuclear power plant respectively from the coordinate axes in the overall local coordinate system of the target support member, and constructing the mechanical analysis model coordinate system with the directions approaching the directions of the global coordinate system according to the directions of the matched coordinate axes comprises:
   computing a matching degree between each coordinate axis in the overall local coordinate system and each coordinate axis in the global coordinate system respectively according to the direction vector information of the overall local coordinate system and the direction vector information of the global coordinate system, and constructing the mechanical analysis model coordinate system with the directions approaching the directions of the global coordinate system according to the directions of the coordinate axes with maximum matching degrees.

11. The method according to any one of claims 1 to 10, further comprising:

   for the target support member in the nuclear power plant, determining a key point coordinate of the target support member in the overall local coordinate system, wherein the key point comprises a point for reflecting a shape characteristic and a point for reflecting a force transmission characteristic of the target support member;
   wherein the constructing the mechanical analysis model of the target support member based on the mechanical analysis model coordinate system comprises:
   converting the key point coordinate into the mechanical analysis model coordinate system and obtaining a node coordinate of the mechanical analysis model, to construct the mechanical analysis model according to the node coordinate.

12. A mechanical analysis processing apparatus for a support member used in a nuclear power plant, comprising:

   a determination module configured to, for a target support member used in the nuclear power plant, determine an original pipeline system load of a pipeline system supported by the target support member in a pipeline system coordinate system;
   a construction module configured to determine coordinate axes matching coordinate axes in a global coordinate system of the nuclear power plant respectively from coordinate axes in an overall local coordinate system of the target support member, construct a mechanical analysis model coordinate system with directions approaching directions of the global coordinate system according to directions of the matched coordinate axes, and construct a mechanical analysis model of the target support member based on the mechanical analysis model coordinate system;
   an analysis module configured to convert the original pipeline system load into a target pipeline system load in the mechanical analysis model coordinate system, to allow the mechanical analysis model to perform mechanical analysis processing based on the target pipeline system load.

13. The apparatus according to claim 12, wherein the original pipeline system load comprises an original pipeline load value corresponding to a direction of each coordinate axis in the pipeline system coordinate system, the target pipeline system load comprises a target pipeline load value corresponding to a direction of each coordinate axis in the mechanical analysis model coordinate system; wherein the analysis module is further configured to: when the pipeline system coordinate system is parallel to the mechanical analysis model coordinate system, for the original pipeline load value corresponding to the direction of each coordinate axis in the pipeline system coordinate system, assign the original pipeline load value to a parallel coordinate axis in the mechanical analysis model coordinate system, and obtain a target pipeline load value corresponding to a direction of the parallel coordinate axis, wherein the parallel coordinate axis refers to a coordinate axis in the mechanical analysis model coordinate system that is parallel to the direction of the coordinate axis.

14. The apparatus according to claim 13, wherein the analysis module is further configured to: determine an included angle between each coordinate axis in the pipeline system coordinate system and each coordinate axis in the mechanical analysis model coordinate system respectively, obtain a plurality of included angles, determine whether at least two coordinate axes in the mechanical analysis model coordinate system are respectively parallel to the coordinate axes in the pipeline system coordinate system according to the plurality of included angles and a preset parallel angle error, and determine the mechanical analysis model coordinate system to be parallel to the pipeline system coordinate system when at least two coordinate axes in the mechanical analysis model coordinate system are respectively parallel to the coordinate axes in the pipeline system coordinate system.

15. The apparatus according to claim 12, wherein the global coordinate system comprises a horizontal axis, a longitudinal axis and a vertical axis; wherein the construction module is further configured to: determine coordinate axes respectively matching the horizontal axis, the longitudinal axis and the vertical axis in the global coordinate system in a maximum matching degree from the coordinate axes in the overall local coordinate system of the target support member, determine a direction of the horizontal axis in the mechanical analysis model coordinate system according to a direction of a coordinate axis in the overall local coordinate system matching the horizontal axis in the global coordinate system in the maximum matching degree, determine a direction of the longitudinal axis in the mechanical analysis model coordinate system according to a direction of a coordinate axis in the overall local coordinate system matching the longitudinal axis in the global coordinate system in the maximum matching degree, and determine a direction of the vertical axis in the mechanical analysis model coordinate system according to a direction of a coordinate axis in the overall local coordinate system matching the vertical axis in the global coordinate system in the maximum matching degree, to construct the mechanical analysis model coordinate system with the directions approaching the directions of the global coordinate system.

16. The apparatus according to claim 15, wherein the construction module is further configured to: compute a direction cosine value between each coordinate axis in the overall local coordinate system and each of the horizontal axis, the longitudinal axis, and the vertical axis in the global coordinate system respectively, determine a coordinate axis with a maximum absolute value of the direction cosine value with respect to each coordinate axis in the global coordinate system from the coordinate axes in the overall local coordinate system, and obtain the coordinate axes matching coordinate axes in the global coordinate system in the maximum matching degree respectively.

17. The apparatus according to claim 12, wherein the determination module is further configured to acquire direction vector information of the pipeline system coordinate system extracted from the original pipeline system load and direction vector information of the overall local coordinate system of the target support member; wherein the direction vector information of the pipeline system coordinate system and the direction vector information of the overall local coordinate system are determined with the global coordinate system of the nuclear power plant as a reference coordinate system; wherein the construction module is further configured to compute a matching degree between each coordinate axis in the overall local coordinate system and each coordinate axis in the global coordinate system respectively according to the direction vector information of the overall local coordinate system and the direction vector information of the global coordinate system, and construct the mechanical analysis model coordinate system with the directions approaching the directions of the global coordinate system according to the directions of the coordinate axes with the maximum matching degrees.

18. A computer device, comprising one or more processors and a memory storing computer-readable instructions, wherein the one or more processors, when executing the computer-readable instructions, implement the method of any one of claims 1 to 11.

19. One or more computer-readable storage media, on which computer-readable instructions are stored, wherein the computer-readable instructions, when executed by one or more processors, cause the one or more processors to implement the method of any one of claims 1 to 11.

20. A computer program product, comprising computer-readable instructions, wherein the computer-readable instructions, when executed by one or more processors, cause the one or more processors to implement the method of any one of claims 1 to 11.

FIG. 1

S202

for a target support member used in a nuclear power plant, an original pipeline system load of a pipeline system supported by the target support member in a pipeline system coordinate system is determined

S204

coordinate axes matching coordinate axes in the global coordinate system of the nuclear power plant are determined respectively from coordinate axes in an overall local coordinate system of the target support member, and a mechanical analysis model coordinate system with directions approaching directions of the global coordinate system is constructed according to directions of the matched coordinate axes

S206

a mechanical analysis model of the target support member is constructed based on the mechanical analysis model coordinate system

S208

the original pipeline system load is converted into a target pipeline system load in the mechanical analysis model coordinate system, to allow the mechanical analysis model to perform mechanical analysis processing based on the target pipeline system load

FIG. 2

global
coordinate
system of
nuclear power
plant

overall local
coordinate
system of
support
member

pipeline
system
coordinate
system

FIG. 3

FIG. 4a

FIG. 4b

Mechanical analysis processing apparatus
500 for support member used in nuclear
power plant ⟋502

Determination module

⟋504

Construction module

⟋506

Analysis module

FIG. 5

Memory

Operating system

Computer-Readable
instructions program

Database

Non-transitory storage medium

Processor

Internal memory

System bus

Input/Output interface

Communication
interface

Computer device

FIG. 6

FIG. 7

## INTERNATIONAL SEARCH REPORT

| International application No. |
|---|
| **PCT/CN2022/109785** |

**A. CLASSIFICATION OF SUBJECT MATTER**

G06F 30/17(2020.01)i; G06F 30/20(2020.01)i; G06F 17/00(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 坐标轴, 力学分析, 模型, 管道载荷, 夹角, 平行, coordinate, mechanical analysis, model, piping load, parallel

**C. DOCUMENTS CONSIDERED TO BE RELEVANT**

| Category* | Citation of document, with indication, where appropriate, of the relevant passages | Relevant to claim No. |
|---|---|---|
| A | CN 112487633 A (CHINA NUCLEAR POWER ENGINEERING CO., LTD. et al.) 12 March 2021 (2021-03-12)<br>entire document | 1-20 |
| A | CN 109033604 A (HARBIN INSTITUTE OF TECHNOLOGY) 18 December 2018 (2018-12-18)<br>entire document | 1-20 |
| A | CN 109543333 A (HUNAN UNIVERSITY) 29 March 2019 (2019-03-29)<br>entire document | 1-20 |
| A | JP 2008269455 A (IHI CORP.) 06 November 2008 (2008-11-06)<br>entire document | 1-20 |
| PX | CN 114510801 A (CHINA NUCLEAR POWER DESIGN CO., LTD.(SHENZHEN) et al.) 17 May 2022 (2022-05-17)<br>entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2022** | **03 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/109785**

| Patent document cited in search report | | | Publication date (day/month/year) | Patent family member(s) | | | Publication date (day/month/year) |
|---|---|---|---|---|---|---|---|
| CN | 112487633 | A | 12 March 2021 | None | | | |
| CN | 109033604 | A | 18 December 2018 | None | | | |
| CN | 109543333 | A | 29 March 2019 | CN | 109543333 | B | 22 February 2022 |
| JP | 2008269455 | A | 06 November 2008 | None | | | |
| CN | 114510801 | A | 17 May 2022 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210148251